# NEUE EUROPÄISCHE PATENTSCHRIFT

(11) **EP 2 743 215 B2**
(45) Veröffentlichungstag und Bekanntmachung des Hinweises auf die Entscheidung über den Einspruch: **18.11.2020**
(45) Hinweis auf die Patenterteilung: 21.10.2015
(21) Anmeldenummer: 13466035.6
(22) Anmeldetag: 12.12.2013
(51) Int. Cl.: B65G 1/137

(54) **Pick-to-Point System**
Pick-to-point system
Système Pick-to-Point

(30) Priorität: 17.12.2012 CZ 20120900
(43) Veröffentlichungstag der Anmeldung: 18.06.2014
(73) Patentinhaber: Skoda Auto A.S., 293 60 Mladá Boleslav (CZ)
(72) Erfinder: Sverma, Jaroslav, CZ-293 01 Mladá Boleslav (CZ); Kosek, Martin, CZ-293 01 Mladá Boleslav (CZ)
(74) Vertreter: Hofstetter, Schurack & Partner

(56) Entgegenhaltungen:
- EP-A1- 0 994 761
- EP-A1- 2 484 608
- EP-B1- 0 203 687
- EP-B1- 0 591 845
- EP-B1- 1 630 716
- WO-A1-99/02300
- WO-A2-2005/063607
- DE-A1- 4 412 044
- DE-A1- 19 620 569
- DE-A1- 19 828 659
- DE-B3-102005 033 567
- DE-C2- 19 729 372
- DE-U1- 9 315 384
- JP-A- H 069 021
- JP-A- 2004 231 370
- JP-A- 2009 249 163
- US-A- 3 908 800
- US-A- 4 346 453
- US-A- 4 821 197
- US-A- 5 877 962
- US-B1- 6 711 458

## Beschreibung

### Technisches Gebiet

Die Erfindung betrifft das Pick-to-Point System, das für die Materialkommissionierung und sein Transport aus dem Lager dient.

### Bisheriger Stand der Technik

Derzeit wird das Pick-to-Point System für die Materialkommissionierung und den Transport verwendet. Dies ist beispielhaft im Dokument DE102008043879 beschrieben. Dieses System dient zur Verbesserung des Kommissionierungssprozesses dadurch, dass die während der Kommissionierung vor allem durch den Faktor Mensch verursachte Fehler minimiert werden. Mittels dieses Systems ist die Materialkommissionierung im Lager verlässlicher und schneller.

Bei Nutzung des Pick-to-Point Systems für die Materialkommissionierung und den Transport sind die Informationen über das zu kommissionierende Material im Steuerungssystem gesammelt. Informationen aus dem Steuerungssystem über das zu kommissionierende Material wird eine sequenzierte Materialliste erstellt und nachfolgend auf dem Drucker ausgedruckt. Die sequenzierte Materialliste wird mit dem Scanner eingescannt. Das Einscannen des Strichcodes an der sequenzierten Materialliste dient zur korrekten Identifizierung der Bauteile aus dem Datenspeicher für jeweilige Liste. Der Datenspeicher, zum Beispiel ein PC, sendet dann die Information über die zu kommissionierende Materialauswahl sukzessive an den Lichtprojektor. Danach wird der Lagerort, wo das zu kommissionierende Material gelagert ist, mit beweglicher Lichtquelle des Projektors markiert. Der Mitarbeiter entnimmt so markiertes Material aus dem Lager und legt dieses in den vorbereiteten Sequenzwagen oder Materialkorb ab.

Lösungen von Pick-to-Point-Systemen mit einem Bildschirm für den Kommisionierer sind aus den Dokumenten DE 196 20 569, US 5 877 962 bekannt.

Der Nachteil des jetzigen Standes der Technik des Pick-to-Point Systems liegt darin, dass der Mitarbeiter dank dieses Systems zwar weißt, welches Material er kommissionieren soll, jedoch muss er ermitteln, wieviel des Materials und wohin dieses Material zu kommissionieren ist. Bei diesen Vorgängen kann wieder zum Fehler und dadurch zur Verzögerung in der Materialkommissionierung kommen.

### Darstellung der Erfindung

Die genannten Nachteile der bekannten Lösungen werden durch die vorliegende Lösung gemäß Anspruch 1 beseitigt, die den Prozess der Materialkommissionierung noch mehr erleichtert. Diese Lösung nutzt einen Bildschirm, an dem der Mitarbeiter bei der Kommissionierung des Materials feststellen kann, wieviel des jeweiligen Materials aus dem mit der beweglichen Lichtquelle des Projektors markierten Lagerort zu kommissionieren ist. Der Mitarbeiter legt dann das zu kommissionierende Material an die vorbestimmte Stelle im Sequenzwagen ab. Die Stelle im Sequenzwagen, auf die das kommissionierte Material abgelegt werden soll, wird am Bildschirm so angezeigt, dass die Stellen im Sequenzwagen als Nummern in Zeilen und Spalten dargestellt und für das aktuell kommissionierte Material farblich markiert sind. Die Nummern in Zeilen und Spalten am Bildschirm entsprechen den Positionen, die für bessere Orientierung des Mitarbeiters im Sequenzwagen numerisch gekennzeichnet sind. Die rechts oben am Bildschirm angeführte Nummer entspricht der Materialmenge, die zu kommissionieren ist und die farbliche und numerische Kennzeichnung der Stelle hilft dem Mitarbeiter in der Orientierung, damit er erkennt, welches Material und wohin er aktuell zu kommissionieren hat.

Mittels der Kombination des Pick-to-Point Systems mit dem Bildschirm werden die Vorteile von Beiden verknüpft und somit auch das gesamte Prozess der Kommissionierung vereinfacht und beschleunigt.

### Übersicht der Figuren der Zeichnungen

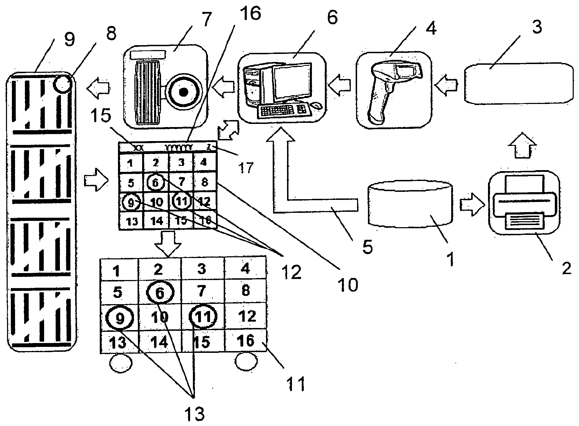

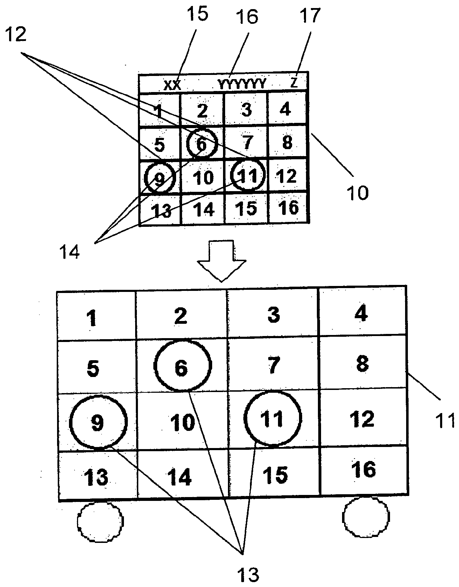

Die Erfindung wird anhand schematischer Abbildungen näher erläutert, wobei zeigen die Fig. 1 in schematischer Darstellung die Kombination des Pick-to-Point Systems mit dem Bildschirm, die Fig. 2 in schematischer Darstellung den Bildschirm und den Sequenzwagen, wobei am Bildschirm numerisch die Menge und die Positionierung der kommissionierten Teile gekennzeichnet sind, welche der Menge und der Position der kommissionierten Teile im Sequenzwagen entsprechen.

### Ausführungsbeispiel der Erfindung

Bei der Nutzung des Pick-to-Point Systems in Kombination mit dem Bildschirm 10 für die Materialkommissionierung und den Transport sind die Informationen über das zu kommissionierte Material im Steuerungssystem 1 gesammelt. Gemäß den Informationen aus dem Steuerungssystem 1 über das zu kommissionierende Material wird eine sequenzierte Materialliste 3 erstellt und nachfolgend auf dem Drucker 2 ausgedruckt. Die sequenzierte Materialliste 3 wird mit Scanner 4 eingescannt. Das Einscannen das Strichcodes an der sequenzierten Materialliste 3 dient zur korrekten Materialidentifizierung aus dem Datenspeicher 6 für die jeweilige sequenzierte Materialliste. Der Datenspeicher 6, zum Beispiel ein PC, sendet dann die Information über die zu kommissionierende Materialauswahl sukzessive an den Lichtprojektor 7. Danach wird der Ort 8 im Lager 9, wo das zu kommissionierende Material gelagert ist, mit beweglicher Lichtquelle des Projektors 7 markiert. Sobald der Mitarbeiter zu dem mit der beweglichen Lichtquelle des Projektors 7 markierten Ort 8 im Lager 9 eintrifft, kann er die angezeigte Menge des zu kommissionierenden Materials entnehmen. Die Menge des zu kommissionierenden Materials, die entnommen werden soll, wird numerisch am Bildschirm 10 angezeigt und für bessere Orientierung des Mitarbeiters sind die Positionen, wo das zu kommissionierende Material abgelegt werden soll, am Bildschirm (10) farblich markiert. Gemäß der Anzeige am Bildschirm 10 entnimmt der Mitarbeiter die definierte Menge des Materials, die mit der Menge des zu kommissionierenden Materials übereinstimmt. Dann legt der Mitarbeiter das kommissionierte Material auf die vorbestimmte Position im Sequenzwagen 11 ab. Sequenzwagen 11 ist ein vom Mitarbeiter bei der Kommissionierung benutzende Transportwagen. Die Position, wo das zu kommissionierende Material abgelegt werden soll, ist am Bildschirm 10 so dargestellt, dass die Positionen im Sequenzwagen 11 am Bildschirm 10 als Nummer in Zeilen und Spalten dargestellt und für das aktuell kommissionierte Material farblich markiert sind. Die Nummern in Zeilen und Spalten am Bildschirm 10 entsprechen den Positionen, die für bessere Orientierung des Mitarbeiters im Sequenzwagen 11 numerisch gekennzeichnet sind. Die rechts oben am Monitor 10 angezeigte Nummer entspricht der Materialmenge, die zu kommissionieren ist und die farbliche Kennzeichnung 12 und Kennzeichnung der Position 14 helfen dem Mitarbeiter in der Orientierung, damit er erkennt, welches Material und wohin er aktuell zu kommissionieren hat. Nach dem Ablegen der definierten Menge des jeweiligen Materials in den Sequenzwagen 11 liest der Mitarbeiter den Strichcode mit dem Scanner 4 ein, den er bei sich hat. Nach dem Einlesen dieses Strichcodes verschiebt sich die bewegliche Lichtquelle des Projektors 7 auf den nächsten Lagerort 9, der angeleuchtet wird, und der Mitarbeiter kann weiteres Material nach der sequenzierten Materialliste 3 kommissionieren. Der Mitarbeiter wiederholt den gesamten Vorgang im gleichen Arbeitsablauf, bis das in der sequenzierten Materialliste 3 enthaltene Material vollständig kommissioniert wird.

### Verwendete Bezeichnungen

- 1: Steuerungssystem
- 2: Drucker
- 3: Sequenzliste
- 4: Scanner
- 5: Datenfluss
- 6: Datenspeicher (PC)
- 7: Projektor
- 8: Lagerort, der farblich mit beweglicher Lichtquelle des Projektors beleuchtet ist
- 9: Lager
- 10: Bildschirm
- 11: Sequenzwagen
- 12: farbliche Hervorhebung derjenigen Positionen am Bildschirm, auf die das Material im Sequenzwagen kommissioniert werden soll
- 13: Material, das an die im Sequenzwagen festgelegte Positionen entsprechend der Bildschirmanzeige abgelegt wurde
- 14: Markierung der Positionen am Bildschirm, die mit Nummern dargestellt sind und mit den Lagerstelen im Sequenzwagen übereinstimmen
- 15: interne Kennzeichnung des Lagerortes des Materials
- 16: Nummer des kommissionierten Materials
- 17: Anzeige der Menge des zu kommissionierenden Materials am Bildschirm, die mit einer Nummer in der rechts oberen Ecke des Bildschirms dargestellt wird

## Patentansprüche

1. Verfahren zum Betreiben eines Pick-to-Point Systems für die Materialkommissionierung und den Transport,
umfassend die Schritte:
- Sammeln von Informationen über zu kommissionierendes Material in einem Steuerungssystem (1) des Pick-to-Point Systems;
- Erstellen einer sequenzierten Materialliste (3) gemäß den Informationen aus dem Steuerungssystem (1) über das zu kommissionierende Material;
- Ausdrucken der sequenzierten Materialliste (3) mittels eines Druckers (2) des Pick-to-Point Systems;
- Einscannen der sequenzierten Materialliste (3) mit einem Scanner (4) des Pick-to-Point Systems, wobei das Einscannen eines Strichcodes an der sequenzierten Materialliste (3) zur korrekten Materialidentifizierung aus einem Datenspeicher (6) des Pick-to-Point Systems für die jeweilige sequenzierte Materialliste (3) dient;
- Senden einer Information über die zu kommissionierende Materialauswahl sukzessive an einen Lichtprojektor (7) des Pick-to-Point Systems mittels des Datenspeichers (6);
- Markieren eines Ortes (8) in einem Lager (9), wo das zu kommissionierende Material gelagert ist, mit einer beweglichen Lichtquelle des Lichtprojektors (7);
- Markieren von Positionen des zu kommissionierenden Materials an einem von einem Mitarbeiter bei der Kommissionierung zu benutzenden Bildschirm (10) des Pick-to-Point Systems, wobei die markierten Positionen den Positionen der zu kommissionierenden Bauteile in einem Sequenzwagen (11) des Pick-to-Point Systems entsprechen;
- Anzeigen einer Menge an dem Bildschirm (10), wobei die angezeigte Menge der zu kommissionierenden Materialmenge entspricht; und
- farbliches Kennzeichnen der Position auf dem Bildschirm (10), welche der Position im Sequenzwagen (11) entspricht, auf die das Material kommissioniert werden soll;
- Entnehmen einer definierten Menge des Materials, die mit der Menge des zu kommissionierenden Materials übereinstimmt, gemäß der Anzeige am Bildschirm (10) durch den Mitarbeiter;
- Ablegen des kommissionierten Materials auf die vorbestimmte Position in dem Sequenzwagen (11) durch den Mitarbeiter;
- Nach dem Ablegen der definierten Menge des jeweiligen Materials in den Sequenzwagen (11): Einlesen des Strichcodes mit dem Scanner (4) durch den Mitarbeiter, welchen der Mitarbeiter bei sich hat;
- Nach dem Einlesen dieses Strichcodes: Verschieben der beweglichen Lichtquelle des Projektors (7) auf den nächsten Lagerort (9), der angeleuchtet wird, sodass der Mitarbeiter weiteres Material nach der sequenzierten Materialliste (3) kommissionieren kann;
- Wiederholen des gesamten Vorgangs durch den Mitarbeiter im gleichen Arbeitsablauf, bis das in der sequenzierten Materialliste (3) enthaltene Material vollständig kommissioniert ist.

2. Verfahren nach Anspruch 1, **dadurch gekennzeichnet, dass** die Materialmenge (17) am Bildschirm (10) durch eine Nummer in der oberen rechten Ecke des Bildschirms (10) angezeigt wird.

3. Verfahren nach Anspruch 1, **dadurch gekennzeichnet, dass** die Positionen (14) des kommissionierten Materials am Bildschirm (10) als Nummern in Zeilen und Spalten dargestellt werden.

## Claims

1. A method for operating a pick-to-point system for material picking and transport,
including the steps of:
- collecting information about material to be picked in a control system (1) of the pick-to-point system;
- creating a sequenced material list (3) according to the information from the control system (1) about the material to be picked;
- printing the sequenced material list (3) by means of a printer (2) of the pick-to-point system;
- scanning the sequenced material list (3) with a scanner (4) of the pick-to-point system, wherein scanning a bar code on the sequenced material list (3) serves for correct material identification from a data memory (6) of the pick-to-point system for the respective sequenced material list (3);
- successively sending information about the material selection to be picked to a light projector (7) of the pick-to-point system by means of the data memory (6);
- marking a location (8) in a stock (9), where the material to be picked is stored, with a movable light source of the light projector (7);
- marking positions of the material to be picked on a monitor (10) of the pick-to-point system to be used in picking by an employee, wherein the marked positions correspond to the positions of the components to be picked in a sequence cart (11) of the pick-to-point system;
- displaying a quantity on the monitor (10), wherein the displayed quantity corresponds to the material quantity to be picked; and
- identifying the position on the monitor (10) by color, which corresponds to the position in the sequence cart (11), onto which the material is to be picked;
- removing a defined quantity of the material, which corresponds with the quantity of the material to be picked, according to the display on the monitor (10) by the employee;
- depositing the picked material onto the predetermined position in the sequence cart (11) by the employee;
- after depositing the defined quantity of the respective material into the sequence cart (11): reading the bar code with the scanner (4) by the employee, which the employee has with him;
- after reading this bar code: displacing the movable light source of the projector (7) to the next stock location (9), which is illuminated, such that the employee can pick further material according to the sequenced material list (3);
- repeating the entire procedure by the employee in the same work flow until the material contained in the sequenced material list (3) is completely picked.

2. The method according to claim 1, **characterized in that** the material quantity (17) is displayed on the monitor (10) by a number in the upper right corner of the monitor (10).

3. The method according to claim 1, **characterized in that** the positions (14) of the picked material are represented on the monitor (10) as numbers in rows and columns.

## Revendications

1. Procédé de fonctionnement d'un système "Pick-to-Point" pour la préparation de commandes de matériau et le transport comportant les étapes suivantes :
- la collecte des informations concernant des commandes de matériau à préparer dans un système de commande (1) du système "Pick-to-Point";
- la création d'une liste de matériau séquentielle (3) selon les informations à partir du système de commande (1) concernant les commandes de matériau à préparer ;
- l'impression de la liste de matériau séquentielle (3) au moyen d'une imprimante (2) du système "Pick-to-Point" ;
- le scanning de la liste de matériau séquentielle (3) au moyen d'un scanner (4) du système "Pick-to-Point", dans lequel le scanning d'un code à barres sur la liste de matériau séquentielle (3) sert à l'identification correcte du matériau à partir d'une mémoire de données (6) du système "Pick-to-Point" pour la liste de matériau séquentielle (3) respective ;
- l'envoi d'une information concernant la sélection de commandes de matériau à préparer successivement à un projecteur lumineux (7) du système "Pick-to-Point" au moyen de la mémoire de données (6) ;
- le marquage d'un endroit (8) dans un entrepôt (9) où les commandes de matériau à préparer sont entreposées, avec une source de lumière mobile du projecteur lumineux (7) ;
- le marquage des positions de commandes de matériau à préparer sur un écran (10) du système "Pick-to-Point" à utiliser par un employé lors de la préparation de commandes de matériau, dans lequel les positions marquées correspondent aux positions des composants à préparer dans un chariot séquentiel (11) du système "Pick-to-Point" ;
- l'affichage d'une quantité sur l'écran (10), dans lequel la quantité affichée correspond à la quantité de commandes de matériau à préparer ; et
- le marquage en couleur de la position sur l'écran (10) qui correspond à la position dans le chariot séquentiel (11) à laquelle les commandes de matériau doivent être préparées ;
- le prélèvement par l'employé d'une quantité définie du matériau qui correspond à la quantité de commandes de matériau à préparer selon l'affichage sur l'écran (10) ;
- le dépôt de commandes de matériau préparées à la position prédéfinie dans le chariot séquentiel (11) par l'employé ;
- après le dépôt de la quantité définie de commandes de matériau respectives dans le chariot séquentiel (11) : la lecture du code à barres au moyen du scanner (4) par l'employé que l'employé a sur lui ;
- après la lecture de ce code à barres : le déplacement de la source de lumière mobile du projecteur (7) à l'endroit prochain de l'entrepôt (9) qui est illuminé de sorte que l'employé peut préparer une autre commande de matériau selon la liste de matériau séquentielle (3) ;
- la répétition de toute l'opération par l'employé dans le même déroulement du travail jusqu'à ce que le matériau contenu dans la liste de matériau séquentielle (3) soit complètement préparé.

2. Procédé selon la revendication 1, **caractérisé en ce que** la quantité de matériau (17) est affichée sur l'écran (10) par un numéro dans le coin supérieur droit de l'écran (10).

3. Procédé selon la revendication 1, **caractérisé en ce que** les positions (14) de commandes de matériau préparés sont affichées sur l'écran (10) sous forme de numéros en lignes et colonnes.
